# EUROPEAN PATENT APPLICATION

(11) **EP 2 680 549 A1**
(43) Date of publication of application: **01.01.2014**
(21) Application number: 12764832.7
(22) Date of filing: 15.03.2012
(51) Int. Cl.: H04M 1/2745, H04M 1/725, G06F 11/14

(54) **METHOD AND DEVICE FOR PROCESSING MOBILE PHONE DATA**

(30) Priority: 29.03.2011 CN 201110077302
(71) Applicant: Huawei Device Co., Ltd., Longgang District Shenzhen Guangdong 518129 (CN)
(72) Inventor: FENG, Jicai, Shenzhen Guangdong 518129 (CN)
(74) Representative: Haley, Stephen
(86) International application number: PCT/CN2012/072353
(87) International publication number: WO 2012/130043

(57) **Abstract**

Embodiments of the present invention provide a method and a device for processing mobile phone data. The method includes: traversing data to be processed and storing handle identifiers of the data to be processed; during a process of storing the handle identifiers of the data to be processed, determining whether an instruction of canceling processing from a user is received, if the instruction of canceling processing from the user is received, clearing the stored handle identifiers; and if no instruction of canceling processing from the user is received, performing, after the process of storing the handle identifiers of the data to be processed is completed, unified processing on the data to be processed. Compared with the solution in the prior art that the data to be processed is read one by one and processed one by one, the embodiments of the present invention adopt a staged and batch processing technology, which can improve the data processing speed, and meanwhile, no actual processing operation is performed on the data during the process of storing or clearing the handle identifiers, which can ensure that the mobile phone data after the processing is canceled are consistent with the mobile phone data before the processing.

## Description

### CROSS-REFERENCE TO RELATED APPLICATIONS

This application claims priority to Chinese Patent Application No. 201110077302.5, filed with the Chinese Patent Office on March 29, 2011 and entitled "METHOD AND DEVICE FOR PROCESSING MOBILE PHONE DATA", which is incorporated herein by reference in its entirety.

### FIELD OF THE INVENTION

The present invention relates to a method and a device for processing mobile phone data.

### BACKGROUND OF THE INVENTION

With the performance improvement of a mobile phone, the storage space is larger and larger, more and more data is stored in the mobile phone, and also more and more data processing is related. In the existing data processing solution of the mobile phone, for example, the processing of data of contact persons and short messages is generally to read data one by one from one or more data to be processed and to perform processing such as copying, deleting, backing up, and importing one by one, and the processing speed is slow; and during the processing process, once a user finds a mis-operation and cancels the processing, in the existing solution, the user may only abort the processing of currently unprocessed data, but the existing solution lacks effective data restoring ability for processed data, which cannot ensure that the mobile phone data after the processing is canceled are consistent with the mobile phone data before the processing.

### SUMMARY OF THE INVENTION

Embodiments of the present invention provide a method and a device for processing mobile phone data, which can improve the data processing speed, and meanwhile, during the processing process, can ensure that the mobile phone data after the processing is canceled are consistent with the mobile phone data before the processing.

The embodiments of the present invention adopt the following technical solutions.

A method for processing mobile phone data includes:
traversing data to be processed and storing handle identifiers of the data to be processed;
during a process of storing the handle identifiers of the data to be processed, determining whether an instruction of canceling processing from a user is received;
if the instruction of canceling processing from the user is received, clearing the stored handle identifiers; and
if no instruction of canceling processing from the user is received, performing, after the process of storing the handle identifiers of the data to be processed is completed, unified processing on the data to be processed.

A device for processing mobile phone data includes:
a pre-processing unit, configured to traverse data to be processed and store handle identifiers of the data to be processed;
a determination unit, configured to, during a process of storing the handle identifiers of the data to be processed, determine whether an instruction of canceling processing from a user is received;
a first processing unit, configured to, when the determination unit determines that the instruction of canceling processing from the user is received, clear the stored handle identifiers; and
a second processing unit, configured to, when the determination unit determines that no instruction of canceling processing from the user is received, perform, after the process of storing the handle identifiers of the data to be processed is completed, unified processing on the data to be processed.

In the embodiments of the present invention, when data to be processed is traversed, handle identifiers of the data to be processed are stored, and after the storing of the handle identifiers of the data to be processed is completed, unified processing is performed on the data to be processed. Compared with the solution in the prior art that the data to be processed is read one by one and processed one by one, the embodiments of the present invention adopt a staged and batch processing technology, thereby improving the data processing speed and enhance user experience; and meanwhile in the embodiments of the present invention, during a process of storing the handle identifiers of the data to be processed, once the user cancels the processing, the stored handle identifiers are cleared. No actual processing operation is performed on the data during the process of storing or clearing the handle identifiers, which can ensure that the mobile phone data after the processing is canceled are consistent with the mobile phone data before the processing, thereby effectively solving data loss or disorder caused by an abnormal operation.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons skilled in the art may still derive other drawings from these accompanying drawings without creative efforts.

FIG 1 is a schematic flow chart of a method for processing mobile phone data according to an embodiment of the present invention;

FIG 2 is a schematic structural diagram of a device for processing mobile phone data according to an embodiment of the present invention; and

FIG 3 is another schematic structural diagram of a device for processing mobile phone data according to an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

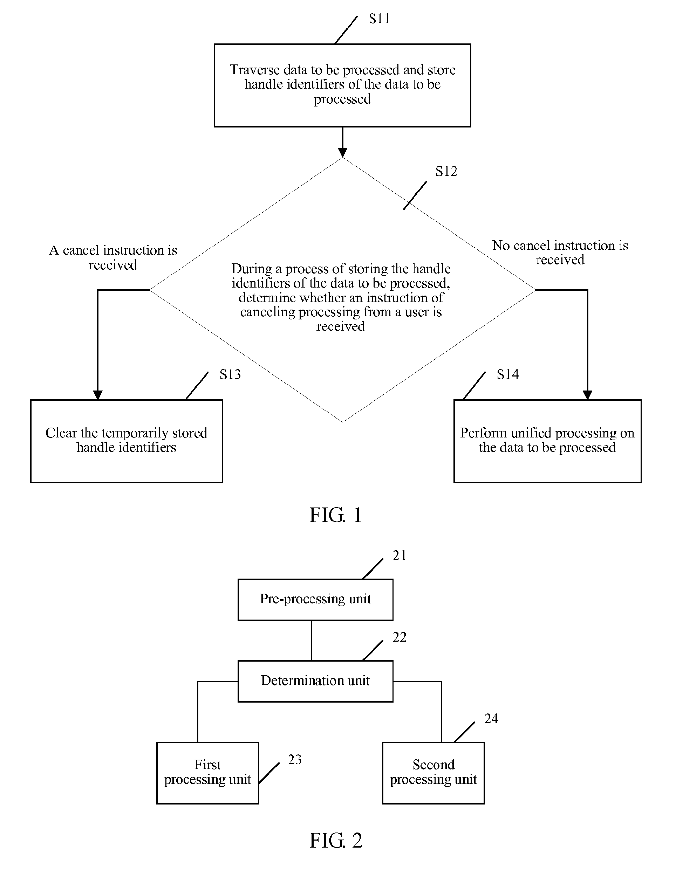

Referring to FIG. 1, an embodiment of the present invention provides a method for processing mobile phone data, and the method includes the following steps:

S11: Traverse data to be processed and store handle identifiers of the data to be processed.

For example, on a mobile phone display interface, when a user selects all contact persons or selects contact persons needing to be processed by selecting a (Check) frame as data to be processed, then clicks the "delete the selected contact persons" operation, data of the selected contact persons is read one by one in a mobile phone operation background, and in the reading process, the handle identifiers of the data of the selected contact persons are stored, where each datum to be processed has one-to-one correspondence with handle identifiers. The process of storing the handle identifiers is performed for data one by one. At this time, what the user sees on the mobile phone display interface is contact person information that is being deleted one by one, and meanwhile the user may further see a processing progress on the mobile phone display interface, where the processing progress may be displayed in a form of a processing progress bar or a completion rate.

The mobile phone data type that the user may select includes, but not limited to, contact persons, short messages and files, and processing operations that the user may select include, but not limited to, copying, cutting, deleting, backing up, importing or exporting.

S12: During a process of storing the handle identifiers of the data to be processed, determine whether an instruction of canceling processing from a user is received.

S 13: If the instruction of canceling processing from the user is received, clear the stored handle identifiers.

Still taking the above "delete the selected contact person" operation as an example, when the mobile phone displays processing information of the contact persons that is being deleted to the user one by one on the display interface, once the user finds the data that is being processed is mistaken or suspected, the user needs to only click the "cancel" operation, and the mobile phone clears the handle identifiers already stored in the operation background. The process of clearing the handle identifiers is performed for data one by one. At this time, what the user sees on the mobile phone display interface is contact person information whose deletion is being canceled one by one, and meanwhile the user may further see a processing progress on the mobile phone display interface, where the processing progress may be displayed in a form of a processing progress bar or a completion rate.

S14: If no instruction of canceling processing from the user is received, perform, after the process of storing the handle identifiers of the data to be processed is completed, unified processing on the data to be processed.

In this step, after the storing of the handle identifiers of the data to be processed is completed, a notification that data processing is successful may further pop up to the user on the mobile phone display interface, but at this time, no processing such as actual deleting and backing up is performed on the data. Only after the user confirms the display notification, the mobile phone operation background performs, according to the stored handle identifiers, the unified processing on the data to be processed, where the unified processing includes: copying, cutting, deleting, backing up, importing or exporting, but at this time, the background processing is not displayed to the user on the mobile phone display interface.

It can be known that, in the method for processing mobile phone data in the embodiment of the present invention, when the data to be processed is traversed, the handle identifiers of the data to be processed are stored, and after the storing of the handle identifiers of the data to be processed is completed, unified processing is performed on the data to be processed. Compared with the solution in the prior art that the data to be processed is read one by one and processed one by one, the embodiment of the present invention adopts a staged and batch processing technology, thereby improving the data processing speed and enhance user experience; and meanwhile in the embodiment of the present invention, during the process of storing the handle identifiers of the data to be processed, once the user cancels the processing, the stored handle identifiers are cleared. No actual processing operation is performed on the data during the process of storing or clearing the handle identifiers, which can ensure that the mobile phone data after the processing is canceled are consistent with the mobile phone data before the processing, thereby effectively solving data loss or disorder caused by an abnormal operation.

It should be noted that, in order to implement the method for processing mobile phone data in the embodiment of the present invention, a pointer object operation technology may be used. First, according to a specific processing operation selected by the user, corresponding classes are established, such as a copying class, a deleting class, a backing up class and an importing class, then instantiation of a data interface for all data to be processed selected by the user is completed in a class initialization function, a motion member function is encapsulated in class members and motion encapsulation is performed on an actual operation object.

Specifically, in the first step, taking an object pointer as an operation object, when operations such as deleting and copying are performed on all data to be processed, a data table is opened, after data resources are read one by one, only a data object pointer is stored in defined class members, and meanwhile corresponding processing is reported to the user, but no actual processing such as deleting and copying is performed; and when processing is performed in the first step, once the user cancels the processing, a program will terminate the current operation. At this time, only the data pointer object already stored in the class members needs to be emptied, without bringing any changes to the actual data. In the second step, after the processing in the first step is completed, in the meanwhile of popping up the notification that the processing is successful to the user, the background automatically invokes the motion function of the class members, and through the data object pointer stored in the class members, final processing such as deleting and copying is completed.

The processing of the mobile phone data by use of the pointer object may bring the following beneficial effects:
(1) data loss or disorder caused by an abnormal operation is effectively solved;
(2) the architecture of class members may be multiplexed and coding efficiency and maintainability may be improved;
(3) performing batch processing on the data object pointer can improve the data processing speed and enhance user experience; and
(4) because only the data object pointer is saved in the class members, the occupation of lots of system memory is avoided.

Referring to FIG. 2, an embodiment of the present invention provides a device for processing mobile phone data, including:
a pre-processing unit 21, configured to traverse data to be processed and store handle identifiers of the data to be processed;
a determination unit 22, configured to, during a process that the pre-processing unit 21 stores the handle identifiers of the data to be processed, determine whether an instruction of canceling processing from a user is received;
a first processing unit 23, configured to, when the determination unit 22 determines that the instruction of canceling processing from the user is received, clear the stored handle identifiers; and
a second processing unit 24, configured to, when the determination unit 22 determines that no instruction of canceling processing from the user is received, perform, after the process that the pre-processing unit stores the handle identifiers of the data to be processed is completed, unified processing on the data to be processed.

Specifically, the pre-processing unit 21, according to the operation selected by the user such as copying, deleting, backing up and importing, for part or all the contact persons, short messages and files selected by the user, reads the data to be processed one by one in the mobile phone operation background, and in the read process, stores the handle identifiers of the data to be processed.

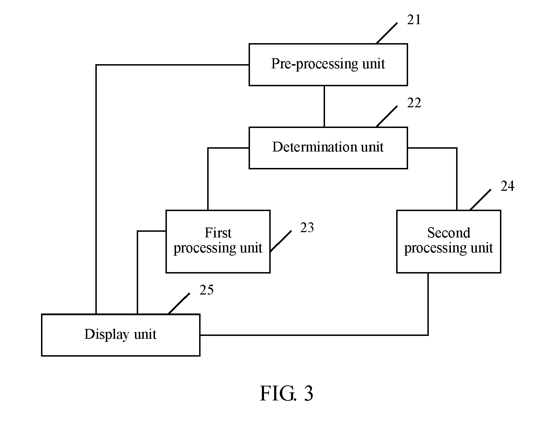

Furthermore, referring to FIG. 3, the device for processing mobile phone data in the embodiment of the present invention further includes a display unit 25. When the pre-processing unit 21 traverses the data to be processed, the display unit 25 displays the data that is being processed one by one to the user on the mobile phone display interface, and displays a processing progress, where the processing progress is displayed in a form of a progress bar and/or a completion rate.

When the user clicks the "cancel" operation on the display interface, the stored handle identifiers are cleared in the mobile phone operation background; at this time, when the first processing unit 23 clears the stored handle identifiers, the display unit 25 displays data on which the processing is being canceled to the user one by one on the mobile phone display interface, and displays the processing progress, for example, rolls back a processing progress bar starting from the current operation point to zero point with the canceling progress.

After the pre-processing unit 21 completes the storing of the handle identifiers of the data to be processed, the display unit 25 pops up a notification that data processing is successful to the user on the mobile phone display interface. After the user confirms the display notification, the second processing unit 24 performs unified processing on the data to be processed in the mobile phone operation background according to the stored handle identifiers, where the unified processing includes: copying, cutting, deleting, backing up, importing or exporting.

In specific implementation of the device for processing mobile phone data in the embodiment of the present invention, an object operation technology may be used and an object pointer may be taken as an operation object. When all data to be processed is processed, a data table is opened, and when data resources are read one by one, the pre-processing unit 21 stores the data object pointer in defined class members, and meanwhile reports corresponding processing to the user, but not perform actual data processing; and once the user cancels the processing, the first processing unit 23 empties the data pointer object already stored in the class members, without bringing any changes to actual data, thereby ensuring that the mobile phone data after the processing is canceled are consistent with the mobile phone data before the processing, and effectively solving data loss or disorder caused by an abnormal operation. After the pre-processing unit 21 completes the storing of all the handle identifiers of the data to be processed, and when the display unit 25 pops up a notification that processing is successful to the user, the second processing unit 24 automatically invokes the motion function of the class members, and through the data object pointer stored in the class members, completes final batch data processing, thereby improving the data processing speed and enhancing user experience.

Finally, it should be noted that, in the method and device for processing mobile phone data in the embodiments of the present invention, the pointer object operation technology is fully used, and two-step processing is performed on the mobile phone data. The first step is only to store the handle identifiers of the data to be processed without performing actual processing. Once mis-operation occurs, the stored handle identifiers are cleared, thereby effectively solving data loss or disorder caused by an abnormal operation; and in the second step, after the storing of the handle identifiers of the data to be processed is completed, batch processing is performed on the data object pointer, thereby improving the data processing speed. It should be understood that, in the present invention, the method that uses a pointer object to perform multi-step operations may be applied in related fields such as file management, memory management, contact person management and short message management of a mobile phone.

Person of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a Read-Only Memory (Read-Only Memory, ROM), or a Random Access Memory (Random Access Memory, RAM).

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for processing mobile phone data, comprising:
traversing data to be processed and storing handle identifiers of the data to be processed;
during a process of storing the handle identifiers of the data to be processed, determining whether an instruction of canceling processing from a user is received;
if the instruction of canceling processing from the user is received, clearing the stored handle identifiers; and
if no instruction of canceling processing from the user is received, performing, after the process of storing the handle identifiers of the data to be processed is completed, unified processing on the data to be processed.

2. The method according to claim 1, wherein when the data to be processed is traversed, the method further comprises:
on a mobile phone display interface, displaying the data that is being processed to the user one by one, and displaying a processing progress, wherein the processing progress is displayed in a form of a progress bar and/or a completion rate.

3. The method according to claim 1, wherein when the stored handle identifiers are cleared, the method further comprises:
on a mobile phone display interface, displaying the data on which the processing is being canceled to the user one by one, and displaying a processing progress, wherein the processing progress is displayed in a form of a progress bar and/or a completion rate.

4. The method according to claim 1, wherein after the storing the handle identifiers of the data to be processed is completed, the method further comprises:
popping up a notification that data processing is successful to the user on a mobile phone display interface.

5. The method according to any one of claims 1 to 4, wherein the performing the unified processing on the data to be processed comprises:
in a background of a mobile phone operating system, performing, according to the stored handle identifiers, the unified processing on the data to be processed, wherein the unified processing comprises: copying, cutting, deleting, backing up, importing or exporting.

6. A device for processing mobile phone data, comprising:
a pre-processing unit, configured to traverse data to be processed and store handle identifiers of the data to be processed;
a determination unit, configured to, during a process that the pre-processing unit stores the handle identifiers of the data to be processed, determine whether an instruction of canceling processing from a user is received;
a first processing unit, configured to, when the determination unit determines that the instruction of canceling processing from the user is received, clear the stored handle identifiers; and
a second processing unit, configured to, when the determination unit determines that no instruction of canceling processing from the user is received, perform, after the process that the pre-processing unit stores the handle identifiers of the data to be processed is completed, unified processing on the data to be processed.

7. The device according to claim 6, further comprising:
a display unit, configured to, when the pre-processing unit traverses the data to be processed, on a mobile phone display interface, display the data that is being processed to the user one by one, and display a processing progress, wherein the processing progress is displayed in a form of a progress bar and/or a completion rate.

8. The device according to claim 7, wherein the display unit is further configured to, when the first processing unit clears the stored handle identifiers, on the mobile phone display interface, display data on which the processing is being canceled to the user one by one, and display the processing progress.

9. The device according to claim 8, wherein the display unit is further configured to, after the second processing unit completes the storing of the handle identifiers of the data to be processed, and on the mobile phone display interface, pop up a notification that data processing is successful to the user.

10. The device according to any one of claims 6 to 9, wherein the second processing unit is specifically configured to, in a background of a mobile phone operating system, perform, according to the stored handle identifiers, the unified processing on the data to be processed, wherein the unified processing comprises: copying, cutting, deleting, backing up, importing or exporting.
